# EUROPÄISCHE PATENTSCHRIFT

(11) **EP 1 314 920 B1**
(45) Veröffentlichungstag und Bekanntmachung des Hinweises auf die Patenterteilung: **12.09.2007**
(21) Anmeldenummer: 02026343.0
(22) Anmeldetag: 22.11.2002
(51) Int. Cl.: F16K 15/14

(54) **Rückschlagventil**
Check valve
Soupape de non-retour

(30) Priorität: 27.11.2001 DE 10157815
(43) Veröffentlichungstag der Anmeldung: 28.05.2003
(73) Patentinhaber: KNORR-BREMSE SYSTEME FÜR NUTZFAHRZEUGE GMBH, 80809 München (DE)
(72) Erfinder: Majlath, Attila, 600 Kecskemét (HU); Toth, Janos, 600 Kecskemét (HU)

(56) Entgegenhaltungen:
- EP-A- 0 406 936
- GB-A- 2 052 018
- US-A- 2 640 481
- US-A- 2 644 663
- US-A- 2 670 757
- US-A- 3 957 078
- US-A- 5 381 563

## Beschreibung

Die vorliegende Erfindung bezieht sich auf ein Rückschlagventil gemäß dem Oberbegriff des Patentanspruches 1.

Ein solches Rückschlagventil ist aus der GB-A-2 052 018 bekannt. Dieses Rückschlagventil hat ein Gehäuse mit einer Durchgangsöffnung, in der eine kreisförmige, starre, flache Scheibe mit mehreren Öffnungen und eine diese überdeckende flexible Membran angeordnet sind. Die Membran weist eine mittige Öffnung auf, die gegenüber den Öffnungen der Scheibe radial versetzt angeordnet sind.

Die US-A-5,381,563 zeigt ein Rückschlagventil mit einem in Axialrichtung langgestreckten Ventilkörper, der einen radial abstehenden Flansch hat, der von einem L-förmigen Abschnitt einer flexiblen Membran übergriffen wird. Die Membran hat eine mittige Öffnung, die an einem Ventilsitz des Ventilkörpers zur Anlage kommen kann. Weiter hat der Ventilkörper mehrere kreissegmentförmige Kanäle.

Rückschlagventile in pneumatischen oder hydraulischen Anlagen sind allgemein bekannt (vgl. Kraftfahrtechnisches Taschenbuch, Bosch, 22. Auflage, VDI-Verlag, 1995, S. 768). Rückschlagventile dienen generell dazu, den Fluß eines Mediums nur in einer Richtung zuzulassen und ihn in der Gegenrichtung zu unterbinden. Rückschlagventile haben vielfältige Anwendungsmöglichkeiten. Im Bereich der Kraftfahrzeugtechnik und insbesondere bei Bremsanlagen dienen sie unter anderem dazu, ein Reservoir mit Preßluft zu füllen und einen Rückfluß aus dem Reservoir zum Kompressor abzusperren. Weiter dienen sie zum Schutz pneumatischer Systeme gegen Luftverlust. Auch werden Rückschlagventile als Grundelement in pneumatischen Logik-Schaltungen verwendet. Dies sind nur einige wenige Beispiele. Bekannte Rückschlagventile haben ein Gehäuse, in welchem ein Ventilkörper, wie z.B. eine Kugel, durch eine Feder gegen einen Ventilsitz gedrückt wird. Wird ein Medium unter Druck an die Öffnungsseite angelegt, so wird der Ventilkörper gegen die Kraft der Feder von dem Ventilsitz abgehoben und gibt einen Durchlaß frei. In umgekehrter Richtung wird der Ventilkörper durch die Feder und zusätzlich das unter Druck stehende Medium gegen den Ventilsitz gedrückt.

Für die Anforderung in der Kraftfahrzeugtechnik soll ein Rückschlagventil neben seiner Grundfunktion zusätzliche Kriterien erfüllen, wie
- hoher Luftdurchsatz
- geringe Einbaumaße
- geringe Geräuschentwicklung.

Diese Kriterien werden von den bekannten Rückschlagventilen nur unzufriedenstellend erreicht.

Aufgabe der Erfindung ist es daher, ein Rückschlagventil zu schaffen, das bei geringer Baugröße einen hohen Fluiddurchsatz erlaubt und eine geringe Geräuschentwicklung hat.

Diese Aufgabe wird durch die im Patentanspruch 1 angegebenen Merkmale gelöst. Vorteilhafte Ausgestaltungen und Weiterbildungen der Erfindung sind den Unteransprüchen zu entnehmen.

Das Grundprinzip der Erfindung liegt darin, daß das Rückschlagventil eine flache Scheibe mit mindestens einer Öffnung hat und eine Membran mit einer Öffnung, die gegenüber der mindestens einen Öffnung der Scheibe radial versetzt ist, wobei die Membran flexible Dichtflächen hat, die der mindestens einen Öffnung der Scheibe gegenüberliegen und diese absperren bzw. freigeben.

Vorzugsweise hat die Membran eine umlaufende Nut, in der die Scheibe gehalten ist. Scheibe und Membran sind vorzugsweise in einem Gehäuse eingebaut, wobei die radial äußere Mantelfläche der Membran dichtend an der Innenwand des Gehäuses anliegt. Durch den in Axialrichtung (Durchflußrichtung) sehr schmalen Aufbau hat das Rückschlagventil eine sehr geringe Baugröße.

Die Membran ist aus flexiblem Material, wie z.B. vulkanisiertem Gummi, wodurch sich eine sehr geringe Geräuschentwicklung ergibt.

Durch eine Vorverformung der Membran lassen sich die Öffnungs- und Schließkräfte des Rückschlagventiles, einstellen, so daß das Ventil auch schon bei sehr geringen Druckdifferenzen öffnet bzw. schließt. Speziell behandelte, wie z.B. geschliffene oder polierte, Ventilsitze werden nicht benötigt, so daß das Rückschlagventil insgesamt auch aus kostengünstigen Teilen einfach aufzubauen ist.

Vorzugsweise hat die Scheibe mehrere ringsegmentförmige Öffnungen, so daß sich hierdurch große Strömungsquerschnitte - bezogen auf den Gesamtquerschnitt des Ventiles - bilden lassen.

Im folgenden wird die Erfindung anhand eines Ausführungsbeispieles im Zusammenhang mit der Zeichnung ausführlicher erläutert. Es zeigt:
- Fig. 1: einen Querschnitt des Rückschlagventiles in geschlossener Stellung;
- Fig. 2: einen Querschnitt des Ventiles in geöffneter Stellung;
- Fig. 3: eine Draufsicht auf die Scheibe; und
- Fig. 4: einen Querschnitt der Membran.

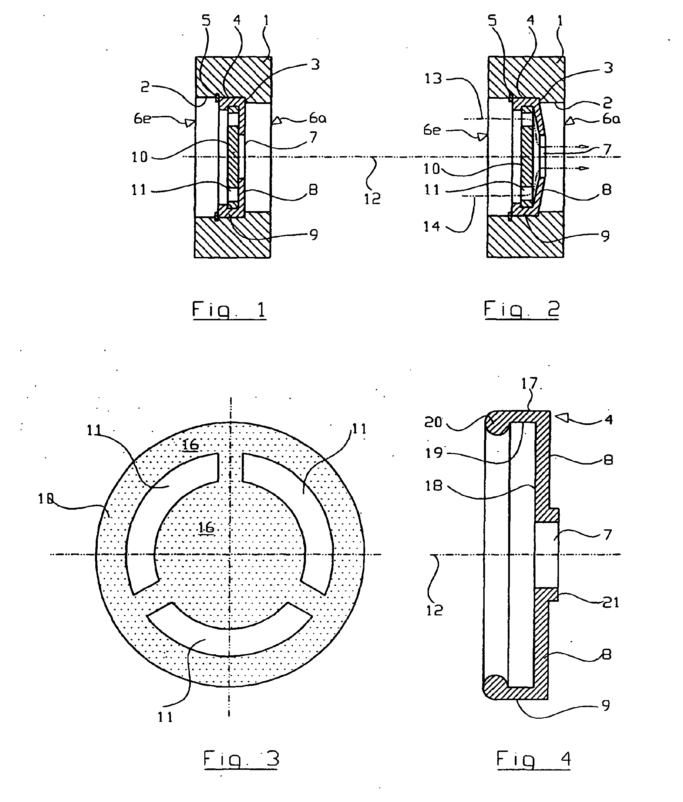

Zunächst sei auf die Figuren 1 und 2 Bezug genommen.

Das Rückschlagventil hat ein Gehäuse 1 mit einer Durchgangsbohrung 2, in der eine Stufe 3 angeordnet ist, an der eine Membran 4 abgestützt ist. Die andere Seite der Membran 4 ist hier durch einen Sprengring 5, der in der Durchgangsbohrung 2 befestigt ist, gehalten. Die Durchgangsbohrung 2 bildet für das Ventil eine Einlaßöffnung 6e und eine Auslaßöffnung 6a, wobei Fluid nur vom Einlaß 6e zum Auslaß 6a strömen kann, nicht aber in umgekehrter Richtung. Die zwischen der Stufe 3 und dem Sprengring 5 gehaltene Membran 4 hat eine zentrale, kreisrunde Öffnung 7, die rings von einem flexiblen Kreisring 8 umgeben ist, der das bewegliche Element der Membran darstellt. An diesen Kreisring schließt sich im Querschnitt der Fig. 1 ein L-förmiger Abschnitt 9 an, dessen radial äußere Mantelfläche (17, Fig. 4) dichtend an der Innenfläche der Durchgangsöffnung 2 anliegt. Der L-förmige Abschnitt 9 bildet zusammen mit dem Kreisring 8 eine Nut, in der eine in der Draufsicht (Fig. 3) kreisförmige starre Scheibe 10 gehalten ist, die hier mehrere Öffnungen 11 hat. Diese Öffnungen sind, wie aus Fig. 3 zu erkennen ist, ringsegmentförmig und gegenüber der Mittelachse 12 radial nach außen versetzt. Bei geschlossenem Ventil liegt der Kreisring 8 an der Oberfläche der Scheibe 10 an und überdeckt die Öffnungen 11, so daß das Ventil geschlossen ist. Die Öffnung 7 der Membran 4 liegt dem Mittelteil der starren Scheibe 10 gegenüber, so daß sich durch den Kreisring 8 und den Mittelteil der Scheibe 10 rings um die Öffnung 7 ein ringförmiger Ventilsitz bildet.

Die Membran 4 kann so vorgeformt sein, daß der Kreisring 8 gegen den Mittelteil der starren Scheibe 10 vorgespannt ist, so daß das Ventil im drucklosen Zustand stets geschlossen ist.

Ist der Druck an der Einlaßseite 6e größer als an der Auslaßseite 6a, so verbiegt sich der Kreisring 8, wie in Fig. 2 dargestellt, und gibt einen Durchlaß von dem Einlaß 6a über die Öffnungen 11, einen Spalt zwischen dem Kreisring 8 und der Scheibe 10, die Öffnung 8 und schließlich zur Auslaßöffnung 6e frei. Das Medium kann dann, wie durch die Pfeile 13 und 14 angedeutet, durch das Ventil strömen. Die Federkonstante der Membran kann durch Wahl des Materiales und der Materialstärke sowie die genannte Vorverformung eingestellt werden, so daß das Ventil auch schon bei sehr geringen Druckdifferenzen öffnet.

Fig. 3 zeigt die Scheibe 10 in Draufsicht sowie drei ringsegmentförmige Öffnungen 11, die konzentrisch um den Kreismittelpunkt angeordnet sind. Die Oberfläche der Scheibe bildet dabei eine Dichtfläche 16 für die Membran bzw. genauer gesagt deren Kreisring 8.

Fig. 4 zeigt einen Querschnitt der Membran, die im Prinzip eine ebene Kreisringscheibe (vgl. Kreisring 8) mit einer zentralen Öffnung 7 ist, wobei sich an diese Scheibe der L-förmige Abschnitt 9 anschließt, der somit mit dem Kreisring 8 eine Nut 19 für die Aufnahme und Halterung der starren Scheibe 10 bildet. Die zur Scheibe 10 weisende Fläche des Kreisringes 8 bildet die Dichtfläche 18 der Membran, die zusammen mit der Dichtfläche 16 der Scheibe den Ventilsitz bildet. Ein die Rückseite umgreifender Teil 20 des L-förmigen Abschnittes 9 kann, wie in Fig. 4 dargestellt, auch einen im wesentlichen kreisförmigen Querschnitt aufweisen. Die äußere Mantelfläche des L-förmigen Abschnittes 9 bildet eine Dichtfläche 17 zwischen der Membran und der Durchgangsbohrung 2 des Gehäuses 1.

Rings um die Öffnung 7 ist hier noch ein axial vorstehender Verstärkungsring 21 vorgesehen, der die Membran versteift und die Rückstell- bzw. Schließkräfte verstärkt.

Das Rückschlagventil nach der Erfindung benötigt lediglich zwei sehr einfache und kostengünstige Teile, nämlich die Membran und eine einfache, vorzugsweise durch Stanzen hergestellte Scheibe. Auch ist die Montage sehr einfach. Die Scheibe muß lediglich in die Nut 19 eingedrückt werden und die Einheit aus Membran und Scheibe muß dann im Gehäuse befestigt werden. Auch ist das Ventil sehr geräuscharm. Es benötigt eine sehr geringe Einbaulänge in Axialrichtung, hat - bezogen auf seine Baugröße - eine sehr hohe Durchflußrate und einen sehr geringen Ansprechdruck. Umgekehrt ist es von der Schließseite her mit hohem Druck von mehr als 20 bar belastbar. Auch spricht es sehr schnell an und ist in weitem Temperaturbereich betreibbar.

## Patentansprüche

1. Rückschlagventil mit einem Gehäuse (1), das eine Durchgangsöffnung (2) aufweist, in der eine kreisförmige, starre, flache Scheibe (10) mit mehreren Öffnungen (11) und eine diese überdeckende flexible Membran (4) angeordnet sind, wobei die Membran (4) eine Öffnung (7) aufweist, die gegenüber den Öffnungen (11) der Scheibe (10) radial versetzt angeordnet ist,
**dadurch gekennzeichnet,**
**dass** die Öffnungen (10) ringsegmentförmig sind,
**dass** eine Seite der Membran (8) an einer Stufe (3) der Durchgangsöffnung (2) abgestützt ist und die andere Seite der Membran (8) durch einen Sprengring (5) gehalten ist, der in der Durchgangsöffnung (2) befestigt ist,
**dass** die Membran (4) einen L-förmigen Abschnitt (9) aufweist, der eine Nut (19) zur Aufnahme und Halterung der Scheibe (10) bildet, und
**dass** eine äußere Mantelfläche des L-förmigen Abschnittes (9) eine Dichtfläche (17) zwischen der Membran (4) und der Durchgangsöffnung (2) des Gehäuses (1) bildet.

2. Rückschlagventil nach Anspruch 1, **dadurch gekennzeichnet, dass** rings um die Öffnung (7) der Membran (4) ein axial vorstehender Verstärkungsring (21) angeordnet ist.

3. Rückschlagventil nach einem der Ansprüche 1 oder 2, **dadurch gekennzeichnet, dass** die Scheibe (4) ein Stanzteil ist.

4. Rückschlagventil nach einem der Ansprüche 1 bis 3, **dadurch gekennzeichnet, dass** die Membran gummielastisch ist, insbesondere aus vulkanisiertem Gummi besteht.

5. Rückschlagventil nach Anspruch 4, **dadurch gekennzeichnet, dass** ein die Öffnung (7) der Membran (4) umgebender Kreisring (8) derart vorgeformt ist, dass er im unbelasteten Zustand des Rückschlagventiles gegen die Scheibe (10) drückt.

## Claims

1. Check valve with a housing (1) which comprises a through opening (2), in which a flat, rigid, circular disc (10) with a plurality of apertures (11) and a flexible membrane (4) covering them are arranged, wherein the membrane (4) comprises an aperture (4) which is arranged so as to be radially offset relative to the apertures (11) of the disc (10),
**characterised in that**
the apertures (10) are formed in a ring segment,
**in that** one side of the membrane (8) rests on a step (3) of the through opening (2) and the other side of the membrane (8) is retained by a spring clip (5) which is fixed in the through opening (2),
**in that** the membrane (4) comprises an L-shaped section (9) which forms a groove (19) for receiving and holding the disc (10), and
**in that** an outer shell surface of the L-shaped section (9) forms a sealing surface (17) between the membrane (4) and the through opening (2) of the housing (1).

2. Check valve according to claim 1, **characterised in that** an axially projecting reinforcing ring (21) is arranged in a ring around the aperture (7) of the membrane (4).

3. Check valve according to one of the claims 1 or 2, **characterised in that** the disc (4) is a stamped part.

4. Check valve according to one of the claims 1 to 3, **characterised in that** the membrane is rubber-like, in particularly consisting of vulcanised rubber.

5. Check valve according to claim 4, **characterised in that** a circular ring (8) surrounding the aperture (7) of the membrane (4) is pre-formed in such a way that it presses against the disc (10) in the unloaded state of the check valve.

## Revendications

1. Clapet anti-retour comprenant un corps (1) qui a une ouverture (2) de passage dans laquelle sont montés un disque (10) circulaire rigide, plat etayant plusieurs ouvertures (11) et une membrane (4) souple le recouvrant, la membrane ayant une ouverture (7) qui est décalée radialement par rapport aux ouvertures (11) du disque (10),
**caractérisé**
**en ce que** les ouvertures (11) sont en forme de segment de cercle,
**en ce qu'**un côté de la membrane (8) s'appuie sur un épaulement (3) de l'ouverture (2) de passage et en ce que l'autre côté de la membrane (8) est maintenu par un jonc (5) qui est fixé dans l'ouverture (2) de passage,
**en ce que** la membrane a une partie (9) en forme de L, qui forme une gorge (19) de réception et de maintien du disque (10), et
**en ce qu'**une surface latérale extérieure de la partie (9) en forme de L forme une surface (17) d'étanchéité entre la membrane (4) et l'ouverture (2) de passage du corps (1).

2. Clapet anti-retour suivant la revendication 1,
**caractérisé**
**en ce que** tout autour de l'ouverture (7) de la membrane (4) est disposée une bague (21) de renfort en saillie axialement.

3. Clapet anti-retour suivant la revendication 1 ou 2,
**caractérisé**
**en ce que** le disque (4) est une pièce estampée.

4. Clapet anti-retour suivant l'une des revendications 1 à 3,
**caractérisé**
**en ce que** la membrane a l'élasticité du caoutchouc, en étant notamment en caoutchouc vulcanisé.

5. Clapet anti-retour suivant la revendication 4,
**caractérisé**
**en ce qu'**une bague (8) circulaire entourant l'ouverture (7) de la membrane est préformée de manière à appuyer sur le disque (10) lorsque le clapet anti-retour n'est pas chargé.
